# FASCICULE DE BREVET EUROPEEN

(11) **EP 2 204 341 B1**
(45) Date de publication et mention de la délivrance du brevet: **09.05.2012**
(21) Numéro de dépôt: 10150103.9
(22) Date de dépôt: 05.01.2010
(51) Int. Cl.: B65G 17/20, B65G 9/00

(54) **Crochet coulissant**
Verschiebbarer Hacken
Slidable hook

(30) Priorité: 05.01.2009 FR 0950008
(43) Date de publication de la demande: 07.07.2010
(73) Titulaire: Roussel Mecab, 49640 Chemire sur Sarthe (FR)
(72) Inventeur: Roussel, Jean-François, 49640, Chemire sur Sarthe (FR); Martin, Jean-Claude, 49640, Chemire sur Sarthe (FR)
(74) Mandataire: Maillet, Alain

(56) Documents cités:
- DE-B- 1 238 848
- GB-A- 928 359
- US-A- 2 633 088
- US-A- 3 086 482

## Description

La présente invention concerne un crochet coulissant apte à circuler en étant suspendu à un convoyeur aérien pour transporter des marchandises.

On utilise de tels crochets dans de nombreuses industries et en particulier dans des abattoirs où l'on doit transporter des carcasses de viande entre la salle d'abattage, des salles de traitement des carcasses et enfin une salle d'expédition où les carcasses sont chargées dans un camion. On utilise également de tels crochets dans l'industrie de la salaison.

Il existe en particulier des crochets équipés d'une seule roulette et des crochets équipés de deux roulettes et qui peuvent circuler sur les rails d'un convoyeur aérien pour transporter des charges. Les premiers sont destinés à circuler généralement sur des rails droits alors que les seconds peuvent circuler sur des rails comportant des portions courbes.

On connaît encore, à la lecture du document DE 12 38 848 B correspondant au préambule de la revendication 1, un convoyeur sans fin dans lequel peuvent circuler des supports coulissants reliés mutuellement. Chaque support est constitué d'une plaque portante construite en deux parties traversées par trois axes, et aux extrémités desquelles sont montées trois paires de roulettes. Deux roues de guidage sont disposées perpendiculairement aux roulettes d'extrémité, dans des embrèvements creusant localement les bords des deux parties, pour guider latéralement le support. Chaque roue est montée libre à rotation autour d'une broche maintenue prisonnière dans deux demi logements cylindriques débouchant formés entre les deux parties assemblées mutuellement par rivetage, l'un de ces rivets traversant ladite broche pour la bloquer.

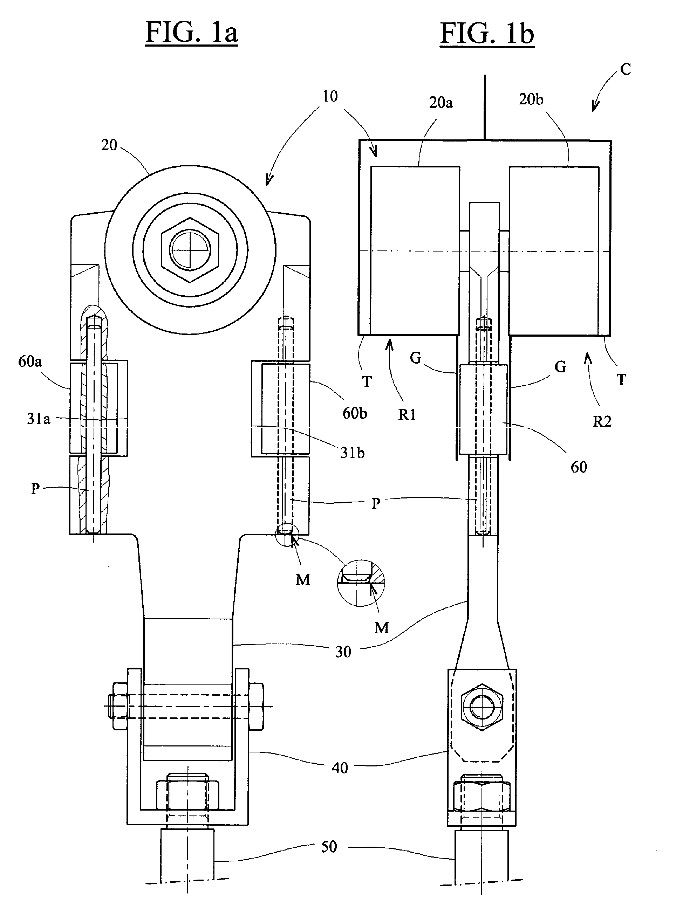

La présente invention vise à apporter une solution pour réparer facilement et à moindre coût les crochets de cette seconde catégorie. Un tel crochet coulissant 10 présenté sur les Figs. 1a et 1b est ainsi pourvu de deux roulettes 20a et 20b montées libres à rotation autour d'un arbre les réunissant, et entre lesquelles est disposée, en étant tenue par l'arbre, une plaque de retenue 30 d'un étrier 40 sur lequel est suspendu un crochet 50, dont seule l'attache est représentée, pour y suspendre une charge. Sur la Fig. 1b, les rails d'un convoyeur aérien C, tournés en vis-à-vis et sur lesquels peut circuler le crochet coulissant portent les références R1 et R2. Ces rails R présentent une section en équerre comprenant une paroi de roulement T sur lesquels les roulettes 20a et 20b peuvent rouler pour déplacer une charge suspendue au crochet 50 et qui est prolongée par une paroi de guidage G, tournée vers le bas et faisant face à la plaque de retenue 30. La distance séparant les deux parois de guidage G est suffisante pour que la plaque de retenue puisse coulisser librement. Afin que le crochet coulissant puisse être guidé latéralement pendant son trajet, deux galets directionnels 60a et 60b prennent respectivement place dans deux passages 31a et 31b prévus dans les bords latéraux de la plaque de retenue 30. Chaque galet 60 est monté libre à rotation autour d'une goupille P prenant ancrage dans la plaque de retenue et dont l'axe est perpendiculaire à celui des deux roulettes 20. Ainsi, les deux galets qui demeurent pratiquement en contact avec la paroi de guidage G guident, du fait de leur éloignement, le crochet coulissant pendant son déplacement sur les rails R.

De façon plus précise, ladite goupille est logée, d'une part, dans un trou traversant la paroi de la plaque de retenue située d'un bord du galet et, d'autre part, dans un trou borgne réalisé dans la paroi de la plaque de retenue située de l'autre côté du galet. Celui-ci est monté libre à rotation autour de ladite goupille. On remarquera que la paroi dans laquelle est réalisé le trou débouchant forme un décrochement avec la partie plus étroite de la plaque de retenue qui supporte l'étrier 40.

Le diamètre de perçage des trous est légèrement inférieur à celui de la goupille pour que son montage, serré, puisse être réalisé au marteau afin d'éviter qu'elle ne ressorte par gravité sous l'effet des vibrations pendant le déplacement du crochet coulissant. Pour plus de sécurité, un matage de la matière, symbolisé par la flèche M, peut être réalisé au débouché du trou, par exemple à l'aide d'un jet et d'un marteau.

Il arrive que ces galets, fortement sollicités et qui sont fabriqués dans un matériau plus tendre que les rails pour ne pas les user, s'usent ou finissent par casser.

Quand un galet est fracturé ou détérioré, il faut le remplacer. Une solution consiste à contre percer un trou dans la paroi où le trou de logement de la goupille est borgne, puis, à l'aide d'un chasse-goupille, faire sortir ladite goupille. On procède ensuite au remplacement du galet par un montage du même type que celui qui vient d'être décrit.

Quand la goupille est fracturée, il est très difficile d'extraire la partie retenue dans le trou borgne. Il faut alors remplacer en entier le galet coulissant.

Aussi, l'invention propose une solution pour remplacer facilement et rapidement un galet dans un tel crochet coulissant.

A cet effet, est proposé un crochet coulissant tel que décrit dans la revendication 1

Le remplacement d'un galet est réalisé en enlevant le moyen de retenue et en retirant le tourillon qui peut ainsi sortir par gravité du trou.

Cette opération est rapide et simple à réaliser.

Selon une caractéristique additionnelle de l'invention, le moyen de retenue est du type amovible.

Le démontage du moyen de retenue est ainsi rendu aisé.

Selon une caractéristique de l'invention, chaque galet est disposé dans un passage encadré par deux parois, le tourillon correspondant étant logé, d'une part, dans un premier trou débouchant, traversant la paroi de la plaque de retenue située d'un bord du galet et, d'autre part, dans un second trou, borgne et coaxial au premier et qui est réalisé dans l'autre paroi de la plaque de retenue située de l'autre côté du galet.

En enfilant le tourillon du côté du trou débouchant, on monte de manière libre à rotation le galet correspondant dans le passage.

Selon une caractéristique de l'invention, le moyen de retenue est constitué d'une vis coopérant avec un taraudage réalisé dans la partie débouchante du premier trou.

Le vissage de la vis permet de maintenir en place le tourillon correspondant et son dévissage permet de le retirer.

Selon une caractéristique additionnelle de l'invention, la longueur du taraudage est de préférence sensiblement égale à celle de la vis.

Le blocage de la vis est obtenu en vissant complètement la vis. Son dévissage pendant le fonctionnement du crochet coulissant devient ainsi impossible.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1a représente une vue de face d'un crochet coulissant connu de l'état de la technique,
la Fig. 1b représente une vue latérale d'un crochet coulissant connu de l'état de la technique,
la Fig. 2a représente une vue de face d'un crochet coulissant selon l'invention, et,
la Fig. 2b représente une vue latérale d'un crochet coulissant selon l'invention.

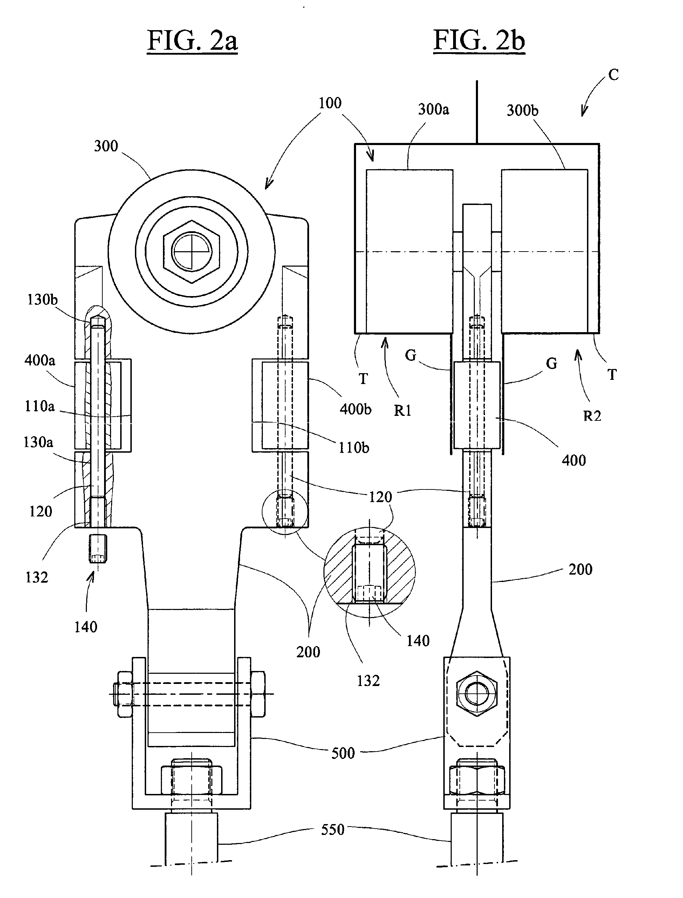

Le crochet coulissant 100 présenté sur les Figs. 2a et 2b est destiné à être utilisé dans l'industrie, pour transporter des charges en circulant de manière suspendue sous un convoyeur aérien C.

Parmi les applications envisagées, on peut citer le transport des carcasses d'animaux dans les abattoirs, le transport de jambon dans les usines de salaison.

Le crochet coulissant 100 se compose d'une plaque de retenue 200 sur laquelle sont fixées des roulettes 300 montées libres à rotation, au nombre de deux sur la Fig. 2b, de galets directionnels 400. Les deux roulettes 300a et 300b sont montées de part et d'autre de la plaque de retenue 200 sur un arbre commun traversant ladite plaque de retenue pour rouler sur des rails R1 et R2 constitutifs du convoyeur aérien C. La présence de ces deux roulettes réunies par un arbre commun procure au crochet coulissant la faculté de pouvoir circuler sur des portions courbes d'un convoyeur aérien.

De manière plus précise, les rails R présentent une section en équerre comprenant une paroi de roulement T sur lesquels les roulettes 300 peuvent rouler pour déplacer une charge suspendue à la plaque de retenue et qui est prolongée par une paroi de guidage G, tournée vers le bas et faisant face à la plaque de retenue 200. La distance séparant les deux parois de guidage G est suffisante pour que la plaque de retenue puisse coulisser librement. Celle-ci est constituée d'une plaque présentant une section en T comprenant une partie haute, relativement large, supportant les roulettes et les galets et une partie basse, plus étroite, sur laquelle est fixé un étrier articulé 500 dans lequel est monté libre à rotation un crochet 550 de suspension d'une charge. Seule la tête d'accrochage de ce crochet est représentée.

Les galets directionnels 400a et 400b sont destinés à permettre le guidage latéral du crochet coulissant 100 pendant son déplacement sur les rails R. Ils coopèrent à cet effet avec les parois de guidage G tournées en vis-à-vis pour que le crochet coulissant 100 puisse suivre la trajectoire imposée par le convoyeur.

Les galets 400a et 400b sont respectivement montés dans deux passages 110a 110b, réalisés sur la Fig. 2a sous la forme de renfoncements, prévus sur les bords latéraux de la partie haute de la plaque de retenue 200. On remarquera que le diamètre des galets est plus important que l'épaisseur de la plaque de retenue 200 pour que seuls les galets puissent coopérer avec les deux parois de guidage G pendant le déplacement du crochet coulissant 100. Par ailleurs, l'axe des galets est situé dans un plan médian de la plaque de retenue 200 pour rendre symétrique la construction dudit crochet.

Chaque galet 400 est retenu de manière libre à rotation dans son renfoncement par l'intermédiaire d'un tourillon 120 dont l'axe est perpendiculaire à celui de l'arbre réunissant les deux roulettes 300a et 300b. La présence de deux galets placés de part et d'autre des roulettes 300 permet de guider latéralement le crochet coulissant indifféremment dans l'un ou l'autre sens de circulation de celui-ci dans le convoyeur.

Chaque tourillon 120 est logé, d'une part, dans un premier trou 130a débouchant traversant la paroi de la plaque de retenue située d'un bord du galet et, d'autre part, dans un second trou 130b, borgne et coaxial au premier et qui est réalisé dans la paroi de la plaque de retenue située de l'autre côté du galet. Celui-ci est monté libre à rotation autour du tourillon. On remarquera que la paroi dans laquelle est réalisé le trou débouchant forme un décrochement avec la partie basse plus étroite de la plaque de retenue qui supporte l'étrier 500. Ces deux parois encadrent un renfoncement 110 comme cela apparaît sur la Fig. 2b.

Le diamètre de perçage des trous 130 est légèrement supérieur à celui du tourillon pour que son montage et son démontage puissent être réalisés librement. Un moyen de retenue 140 coopère avec le tourillon 120 pour le tenir en place. Le moyen de retenue est de préférence du type amovible. Il est constitué sur la Fig. 2a, d'une vis 140 coopérant avec un taraudage 132 réalisé dans la partie débouchante du premier trou 130a tournée vers l'extérieur. Ainsi, on peut rapidement monter un galet 400 en logeant à la main le tourillon 120 successivement dans les trous 130a et 130b, puis en vissant la vis 140. L'opération de démontage d'un galet pour son remplacement est aussi simple et rapide.

La longueur du taraudage est de préférence sensiblement égale à celle de la vis pour que l'opérateur puisse bloquer correctement la vis en la vissant complètement comme cela apparaît sur la vue en détail de la Fig. 2a.

La construction du crochet coulissant de l'invention facilite le remplacement des galets directionnels qui le constituent. Le remplacement est réalisé sans difficulté particulière et en moins d'une minute.

Un tourillon cassé peut être remplacé aussi facilement.

La solution, objet de l'invention est particulièrement économique.

## Revendications

1. Crochet coulissant (100) du type comprenant au moins deux roulettes (300a, 300b) montées libres à rotation de part et d'autre d'une plaque de retenue (200) destinée à supporter un crochet (550) de suspension d'une charge, la plaque de retenue (200) étant pourvue de deux galets directionnels (400a, 400b) montés libres à rotation sur ses bords latéraux, les roulettes (300) étant destinées à rouler sur des parois de roulement (T) constitutives de rails (R) d'un convoyeur aérien (C), les galets (400) étant destinés à coopérer avec des parois de guidage (G) disposées en vis-à-vis, en prolongement desdites parois de roulement (T), chaque galet (400) étant disposé dans un passage (110) encadré par deux parois, chaque galet (400) étant monté autour d'un tourillon (120) logé, d'une part, dans un premier trou (130a) débouchant, traversant la paroi de la plaque de retenue située d'un bord du galet et, d'autre part, dans un second trou (130b) coaxial au premier et qui est réalisé dans l'autre paroi de la plaque de retenue située de l'autre côté du galet, **caractérisé en ce que** le second trou (130b) est borgne et que le moyen de retenue est constitué d'une vis (140) coopérant avec un taraudage (132) réalisé dans la partie débouchante du premier trou (130).

2. Crochet coulissant (100) selon la revendication 1, **caractérisé en ce que** la longueur du taraudage (132) est de préférence sensiblement égale à celle de la vis.

## Claims

1. Sliding hook (100) of the type comprising at least two wheels (300a, 300b) mounted to be freely rotatable one on each side of a retaining plate (200) which is to support a hook (550) for suspending a load, the retaining plate (200) being provided with two directional rollers (400a, 400b) mounted to be freely rotatable on its lateral edges, the wheels (300) being intended to roll along rolling walls (T) forming rails (R) of an overhead conveyor (C), the rollers (400) being intended to cooperate with guide walls (G) arranged opposite each other, as a continuation of the rolling walls (T), each roller (400) being located in a passage (110) framed by two walls, each roller (400) being mounted around a pivot pin (120) accommodated, on the one hand, in a first hole (130a), which is a through-hole and which extends through the wall of the retaining plate located on one side of the roller and, on the other hand, in a second hole (130b) which is coaxial with the first and which is formed in the other wall of the retaining plate located on the other side of the roller, **characterised in that** the second hole (130b) is blind and **in that** the retaining means is formed by a screw (140) cooperating with a thread (132) formed in the through-portion of the first hole (130).

2. Sliding hook (100) according to claim 1, **characterised in that** the length of the thread (132) is preferably substantially equal to that of the screw.

## Patentansprüche

1. Verschiebbarer Haken (100) des Typs, der mindestens zwei Rollen (300a, 300b) aufweist, die frei drehend auf jeder Seite einer Rückhalteplatte (200) montiert sind, die dazu bestimmt ist, einen Haken (550) zum Aufhängen einer Last zu tragen, wobei die Rückhalteplatte (200) mit zwei Richtungswalzen (400a, 400b) versehen ist, die frei drehend auf ihren seitlichen Rändern montiert sind, wobei die Rollen (300) dazu bestimmt sind, auf Rollwänden (T) zu laufen, die Schienen (R) einer Hängebahn (C) bilden, wobei die Walzen (400) dazu bestimmt sind, mit Führungswänden (G) zusammenzuwirken, die in Gegenüberlage in Verlängerung der Rollwände (T) angeordnet sind, wobei jede Walze (400) in einer Passage (110) angeordnet ist, die von zwei Wänden umrahmt ist, wobei jede Walze (400) um einen Zapfen (120) montiert ist, der einerseits in einer ersten durchgehenden Bohrung (130a), die die Wand der Rückhalteplatte, die sich auf einem Rand der Walze befindet, durchquert, und andererseits in einer zweiten Bohrung (130b), die zu der ersten koaxial und in der anderen Wand der Rückhalteplatte auf der anderen Seite der Walze hergestellt ist, aufgenommen ist, **dadurch gekennzeichnet, dass** die zweite Bohrung (130b) ein Sackloch ist und dass das Rückhaltemittel aus einer Schraube (140) besteht, die mit einem Innengewinde (132), das in dem durchgehenden Teil der ersten Bohrung (130) hergestellt ist, zusammenwirkt.

2. Verschiebbarer Haken (100) nach Anspruch 1, **dadurch gekennzeichnet, dass** die Länge des Innengewindes (132) vorzugsweise im Wesentlichen gleich der Länge der Schraube ist.
